Europäisches Patentamt

European Patent Office

Office européen des brevets

(19)

(11) Veröffentlichungsnummer : **0 050 584**
**B1**

(12) **EUROPÄISCHE PATENTSCHRIFT**

(45) Veröffentlichungstag der Patentschrift :
20.02.85

(51) Int. Cl.⁴ : **G 02 B 17/08**

(21) Anmeldenummer : 81810399.6

(22) Anmeldetag : 05.10.81

(54) **Spiegellinsenobjektiv von hohem Öffnungsverhältnis.**

(30) Priorität : 17.10.80 CH 7753/80

(43) Veröffentlichungstag der Anmeldung :
28.04.82 Patentblatt 82/17

(45) Bekanntmachung des Hinweises auf die Patenterteilung : 20.02.85 Patentblatt 85/08

(84) Benannte Vertragsstaaten :
AT DE FR GB IT NL SE

(56) Entgegenhaltungen :
CH-A- 542 454
DE-A- 2 532 578
US-A- 2 378 301
US-A- 3 547 525
US-A- 4 188 091

(73) Patentinhaber : **Canzek, Ludvik, Dr.**
**Quellmattstrasse 3**
**CH-5035 Unterentfelden (CH)**

(72) Erfinder : **Canzek, Ludvik, Dr.**
**Quellmattstrasse 3**
**CH-5035 Unterentfelden (CH)**

(74) Vertreter : **Seifert, Helmut E.**
**RITSCHER & SEIFERT Patentanwälte VSP Auf der**
**Mauer 4**
**CH-8001 Zürich (CH)**

Jouve, 18, rue St-Denis, 75001 Paris, France

EP 0 050 584 B1

## 0 050 584

**Beschreibung**

Die Erfindung bezieht sich auf ein Spiegellinsenobjektiv von hohem Öffnungsverhältnis, das eine Frontlinse, eine Hauptspiegellinse, einen Gegenspiegel und ein sammelndes Feldlinsensystem umfasst, wobei die Brennweite f(1, 2) der Frontlinse der Beziehung f(1, 2) > 2.5 f (f = Objektivbrennweite) genügt.

Objektive vom beschriebenen Aufbau sind bekannt. In der CH-A-542 454 und in L. Canzek: « Lichtstarkes katadioptrisches Objektiv », Optica Acta, Nr. 12, 1971 und Nr. 4, 1972 sind derartige Objektive beschrieben. Der Brennpunkt befindet sich hierbei aber im Objektivinneren, weshalb diese Objektive nicht allgemein verwendbar sind.

Derartige lichtstarke Objektive, bei denen aber der Brennpunkt hinter dem Objektiv liegt, sind in der CH-A-624 776 und in L. Canzek: « Neue Richtung in der Entwicklung der katadioptrischen Objektive », Optica Acta, Nr. 2, 1979 angegeben. Auch die ältere Anmeldung EP-A-81 810 312.9 behandelt Objektive gleicher Bauart. Für alle gemeinsam gilt jedoch, dass sie entweder relativ grosse Baulänge oder grössere sphärochromatische Fehler in einem breiteren Spektralbereich aufweisen.

Die sphärochromatischen Fehler, kurz Sphärochromasie genannt, beeinträchtigen aber die Abbildungsgüte wesentlich. Ihre Wirkung ist besonders störend, wenn das Objektiv in einem breiten Spektralbereich verwendet bzw. in langer Brennweite ausgeführt wird.

Die Erfahrung lehrt (siehe z. B. die Aufstellung weiter unten), dass die Baulänge des lichtstarken Objektivs und die Sphärochromasie bei derartigen bekannten Objektiven gegenläufige Variablen sind und dass man diese Regel mit bekannten Mitteln nicht verändern kann.

Die für die Baulänge massgebende Grösse ist der Luftabstand d2 zwischen der Front- und Hauptspiegellinse. Die Sphärochromasie für die Wellenlänge λ, bezogen auf die Grundspektrallinie d, wird nach der Formel

$$\Delta s'_{\lambda,d} = (s'_R - s'_o)_\lambda - (s'_R - s'_o)_d$$

berechnet, wobei mit $s'_R$ die Schnittweite des aperturbegrenzenden und mit $s'_o$ diejenige des paraxialen Strahls bezeichnet wird.

Eine Verminderung des Abstandes d2 gäbe ein kürzeres, leichteres und vor allem handlicheres Objektiv. Dies würde einen bedeutenden Fortschritt gegenüber dem Stand der Technik mit sich bringen, wenn man berücksichtigt, dass die Baulänge proportional der Brennweite ist und dass Objektive dieser Art in der Regel langbrennweitig ausgeführt werden.

Eine Verkürzung der Baulänge führt aber, wie schon oben erwähnt, nach dem bisherigen Wissen zur Verschlechterung der Sphärochromasie, was die Verwendung von solchen Objektiven in einem breiten Spektralbereich, — bzw. eine langbrennweitige Ausführung dieser — einschränkt, oder gar verunmöglicht.

Soll das Objektiv nicht nur die Bildmitte und ihre nächste Umgebung, sondern auch ein grösseres Bildfeld scharf abbilden, dann muss es mit einem Feldlinsensystem versehen sein. Untersuchungen haben gezeigt, dass bei hoch.geöffneten Objektiven dieser Art ein anastigmatisches und ebenes Bildfeld erreichbar ist, wenn das Feldlinsensystem sammelnd ist, somit genau die entgegengesetzte Wirkung hat wie das Feldlinsensystem in der US-A-4 188 091, welche ein lichtschwaches Objektiv angibt.

Der Erfindung liegt die Aufgabe zugrunde, ein Spiegellinsenobjektiv von hohem Oeffnungsverhältnis zu schaffen, das im Vergleich mit den bekannten Systemen derselben Leistungsklasse bei etwa gleich grosser Sphärochromasie einen kürzeren Abstand zwischen der Front- und Hauptspiegellinse aufweist.

Erfindungsgemäss wird diese Aufgabe durch die im Anspruch 1 gekennzeichneten Maßnahmen gelöst. Vorteilhafte Ausführungsformen des Spiegellinsenobjektivs sind in den Ansprüchen 2 bis 13 beschrieben.

Die Erfindung wird nachfolgend anhand von Zeichnungen und fünf Ausführungsbeispielen, die in den Tabellen der Ansprüche 9 bis 13 angegeben sind, näher erklärt. Es zeigen:

Figuren 1 bis 6 verschiedene Ausführungsformen des erfindungsgemässen Objektivs in schematischer Darstellung,

Figur 7 die sphärische Aberration des Objektivs gemäss Anspruch 9 (welche typisch ist auch für andere Ausführungsbeispiele) für die Wellenlängen $\lambda_d$ = 588 nm, $\lambda_g$ = 436 nm, $\lambda_s$ = 852 nm und

Figur 8 den Astigmatismus des Objektivs nach Anspruch 9, welcher typisch ist auch für andere Ausführungsbeispiele.

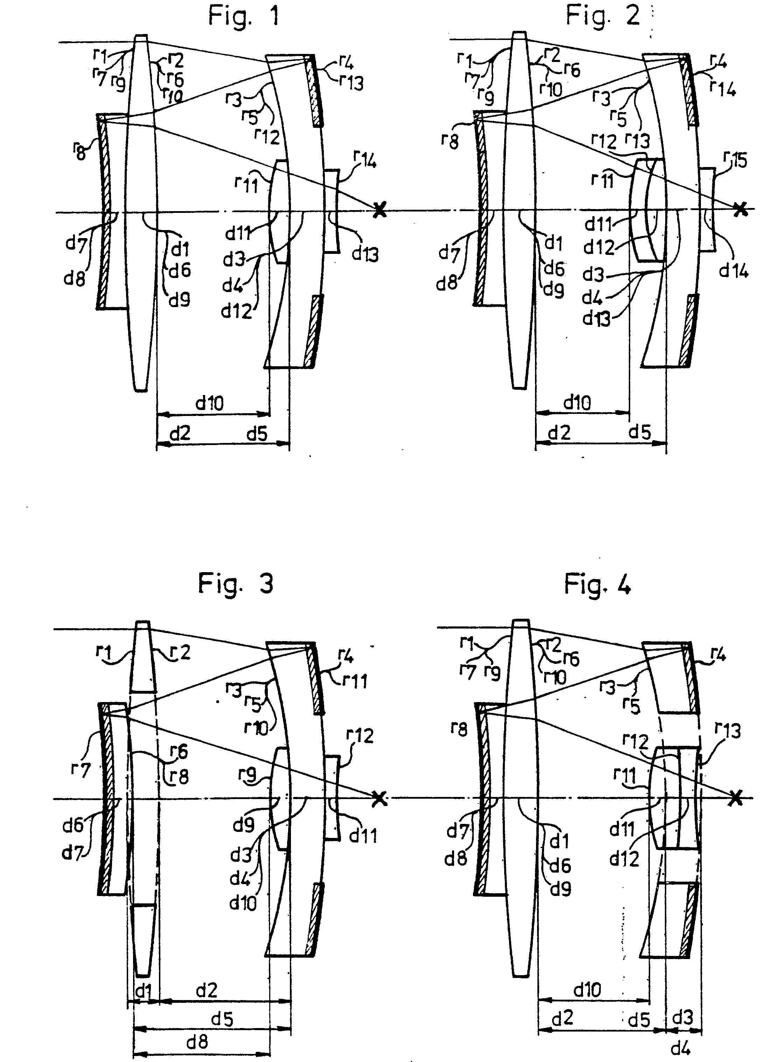

Eine der Form nach einfachste Ausführung der erfindungsgemässen Objektivs ist in der Fig. 1 dargestellt und im Anspruch 9 tabellarisch angegeben. Alle Linsen bis auf einzelne Feldlinsen sind hier und in allen folgenden Beispielen aus derselben Glassorte, damit das sekundäre Spektrum vermieden werden kann.

Einer noch bessere chromatische Korrektur des Bildfeldes wird erreicht, wenn das Feldlinsensystem um eine Linse erweitert wird, wie dies die Fig. 2 zeigt. Die Konstruktionsdaten dieses Beispiels sind in der Tabelle des Anspruchs 10 angeführt.

Will man an Gewicht sparen, dann ist es zweckmässig, den mittleren Teil der Frontlinse auszubohren, wie dies die Fig. 3 zeigt. Ein Ausführungsbeispiel hierfür ist im Anspruch 11 angegeben. Diese und ·

2

nachfolgend beschriebene Objektivformen erleichtern das Korrigieren der Abbildungsfehler, weil sie zusätzliche unabhängige Korrektionsparameter liefern.

Eine Gewichtseinsparung erreicht man auch, wenn der mittlere Teil der Hauptspiegellinse ausgebohrt wird. In einem solchen Fall kann das Feldlinsensystem wesentlich vereinfacht werden. Die Fig. 4 zeigt ein solches Beispiel gemäss Anspruch 12.

Ein Ausbohren der Hauptspiegellinse ermöglicht auch die Verlegung des Feldlinsensystems sowie des Objektivbrennpunktes ins Objektivinnere.

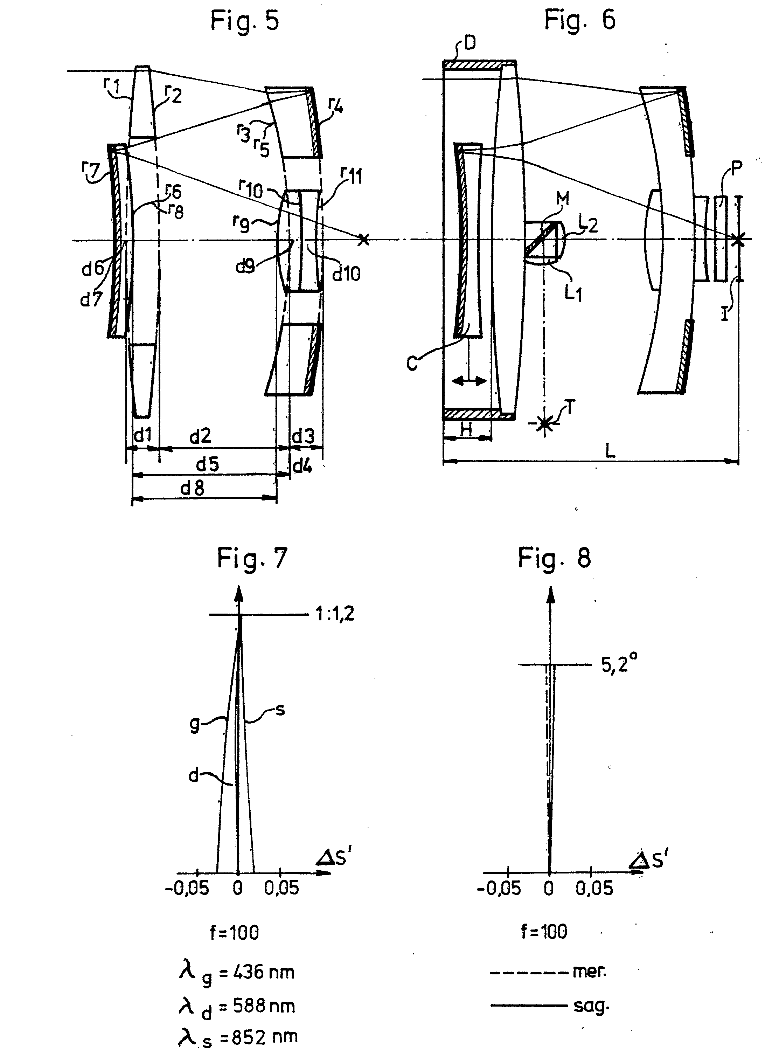

In der Fig. 5 ist ein Ausführungsbeispiel dargestellt, das Ausbohrungen in beiden grossen optischen Elementen vorsieht. Die Konstruktionsdaten dieses Beispiels sind aus dem Anspruch 13 ersichtlich.

Wird der Gegenspiegel als selbständiges Glied C ausgebildet (Fig. 6), dann kann seine Lage gegenüber dem Objektiv veränderbar sein, um dadurch verschiedene Wirkungen wie z. B. das Fokussieren zu erzielen. Das Glied C kann gegenüber der optischen Achse des Objektivs verkippt, längs oder quer versetzt werden, die Veränderung der Lage kann auch als Kombination dieser Bewegungen erfolgen.

Das Fokussieren auf Nahdistanz mit dem Gegenspiegel ist besonders dann vorteilhaft, wenn eine Strich- oder Zielmarke T durch ein Linsensystem L1, L2 und einen Spiegel M in die Bildebene I des Objektivs projiziert wird. In diesem Fall bleiben nämlich der Abstand TI, und dadurch die Schärfe und die Vergrösserung des Strichbildes, beim Fokussieren des Objektivs unbeeinflusst. Ein derartiges Fokussieren ist auch dann vorteilhaft anzuwenden, wenn das Objektiv gut abgedichtet werden muss.

Wird des Feldlinsensystem als selbständiges Glied ausgebildet, wie dies in den Fig. 4 und 5 gezeigt wird, dann kann seine Lage gegenüber dem übrigen Objektiv auf gleiche Art veränderbar sein, wie oben für den Gegenspiegel beschrieben wurde.

Der Gegenspiegel kann selbstverständlich als Oberflächenspiegel gestaltet werden, ohne dabei den Rahmen dieser Erfindung zu verlassen. Ebenfalls in den Rahmen dieser Erfindung gehören Modifikationen der Objektive für Anwendungen wie z. B. in Verbindung mit einer Bildverstärkerröhre der 3. Generation, wenn dieselbe mit einer Glasplatte P vor der Bildebene (Fig. 6) versehen ist.

Objektive nach dieser Erfindung können auch aus Materialien hergestellt werden, die für andere als visuelle Spektralbereiche (z. B. UV oder IR, einschliesslich die sogenannte Wärmebilderzeugung) geeignet sind.

Weil solche Materialien in der Regel andere Brechzahlen als Gläser im visuellen Bereich haben, ergeben die nötigen Umrechnungen Konstruktionsdaten, welche von den hier gebrachten Beispielen erheblich abweichen können. Diese Umrechnungen sind nicht von erfinderischer Natur, sie bleiben im Rahmen dieser Erfindung.

Untersuchungen zufolge können Spiegellinsenobjektive nach dieser Erfindung relativ kurz gebaut sein und trotzdem ein hohes Öffnungsverhältnis wie auch eine ausgezeichnete Abbildung in einem breiten Spektralbereich aufweisen.

Den Fortschritt, den diese Erfindung bringt, sieht man aus nachfolgender Aufstellung. Sie basiert auf einheitlicher Brennweite ($f = 1$) der verglichenen Systeme. Danach ist die Sphärochromasie bei den Objektiven nach dieser Erfindung etwa gleich gross wie beim besten Vergleichsystem der CH-PS 624 776 (Beispiel Nr. 3), welches jedoch einen um ca. 50 % grösseren Abstand d2 und eine noch grössere Baulänge hat, wenn die nötige Gegenlichtblende D (Fig. 6) berücksichtigt wird.

Noch aussagekräftiger ist der Vergleich, wenn man zur Objektivlänge noch die Höhe H einer Gegenlichtblende D an der Frontlinse addiert (Fig. 6). Unter den gleichen Bedingungen (Gesichtsfeld, zentrale Abdeckung usw.) ist dann der Abstand L zwischen dem äusseren Rand der Blende D und dem Bildort I bei den Beispielen in den oben erwähnten CH-PS und Patentanmeldungen um mindestens 55 % grösser als bei den hier gebrachten Objektiven. Den Zeichnungen nach scheint das Setzen des Gegenspiegels vor die Frontlinse eine Erhöhung der Objektivbaulänge um mindestens die Dicke der Gegenspiegellinse C zu bewirken. Dem ist aber nicht so, die nötige Gegenlichtblende ragt weiter nach vorne als der Gegenspiegel in den hier angeführten Systemen.

Auch das Anbringen einer Feldlinse hinter der Hauptspiegellinse bringt keine Verlängerung mit sich, weil in der Regel die Schnittweite um die Dicke dieser Linse verkürzt werden darf.

Die gute Bildqualität der Ausführungsbeispiele nach dieser Erfindung gestattet das Öffnungsverhältnis über das hier angegebene 1 : 1.2 zu erhöhen und die Brennweite über $f = 100$ wesentlich zu vergrössern, ohne dabei die Bildgüte merklich zu verschlechtern.

| Objektiv | Beispiel Nr. | Abstand d2 | Sphärochromasie $\Delta s'_{g,d}$ bei der Blendenzahl B | |
|---|---|---|---|---|
| | | | B | $\Delta s'_{g,d} \times 10^5$ |
| CH-Patent | 1 | 0.62 f | 1.4 | − 24 f |
| 542 454 | 2 | 0.61 f | 1.0 | 4 f |
| | 3 | 0.64 f | 0.9 | 14 f |

# 0 050 584

| Objektiv | Beispiel Nr. | Abstand d2 | Sphärochromasie $\Delta s'_{g,d}$ bei der Blendenzahl B | |
|---|---|---|---|---|
| | | | B | $\Delta s'_{g,d} \times 10^5$ |
| CH-Patent | 1 | 0.47 f | 1.2 | 38 f |
| 624 776 | 2 | 0.47 f | 1.2 | 38 f |
| | 3 | 0.54 f | 1.2 | 21 f |
| | 4 | 0.47 f | 1.2 | 41 f |
| EP-A | 1 | 0.43 f | 1.2 | 45 f |
| 81810312.9 | 2 | 0.43 f | 1.2 | 46 f |
| | 3 | 0.44 f | 1.2 | 42 f |
| Diese | 1 | 0.36 f | 1.2 | 22 f |
| Patent- | 2 | 0.36 f | 1.2 | 24 f |
| anmeldung | 3 | 0.35 f | 1.2 | 22 f |
| | 4 | 0.36 f | 1.2 | 24 f |
| | 5 | 0.34 f | 1.2 | 26 f |

Dank der Möglichkeit preisgünstige, gewichtsmässig leichte und fabrikationsfreundliche Gläser (wie z. B. BK 7) zu verwenden und dank dem einfachen optischen Aufbau sind Objektive nach dieser Erfindung leicht, sehr handlich und in der Herstellung billig. Sie eignen sich besonders für Anwendungen in der Optoelektronik, wenn auf kontrastreiche Abbildung bzw. gute Erkennbarkeit eines kontrastarmen Objektes Wert gelegt wird. Objektive nach dieser Erfindung können mit Erfolg überall dort eingesetzt werden, wo bezüglich der Lichtstärke und Bildqualität höchste Anforderungen gestellt werden.

Die Idee für die hier beschriebene Erfindung kommt aus der Erkenntnis, dass der Abstand zwischen den beiden Spiegeln die Grösse der Abbildungsfehler massgebend beeinflusst, wie dies gemäss der Arbeit von L. Canzek: « Bildfehler dritter Ordnung von klassischen Spiegelobjektiven mit sphärischen Flächen », Optik 57, 1980 verstanden werden kann. Um demzufolge den Abstand der Spiegelflächen möglichst gross und gleichzeitig den Abstand der Front- und Hauptspiegellinse und damit die Baulänge möglichst klein zu halten, wird der Gegenspiegel vor die Frontlinse gesetzt.

Diese Massnahme scheint im Nachhinein sehr selbstverständlich, einfach und leicht zu erklären. Anders ist es, wenn man für die Lösung des gestellten Problems ein neues Prinzip oder Korrektionsmittel im Voraus zu finden hat, obwohl dieses oft ein einfaches sein mag.

Dass dem so ist, lehrt die umfangreiche Patentliteratur über Spiegelobjektive. Beim Studium dieser Schriften wird klar, dass die Lösungen bisher gerade in entgegengesetzter Richtung gesucht wurden (auch vom Urheber dieser Schrift), d. h. dass man den Gegenspiegel auf die Frontlinse aufgedampft oder ins Objektivinnere gesetzt hat. Somit erscheint die erfinderische Massnahme doch nicht als eine an sich selbstverständliche.

**Ansprüche**

1. Katadioptrisches Objektiv hoher Öffnung, das im Frontteil nur eine Einzellinse, deren Brennweite f(1, 2) der Beziehung f(1, 2) $\geqslant$ 1.8 f (f = Objektivbrennweite) genügt, hat und eine Hauptspiegellinse, einen Gegenspiegel sowie ein sammelndes Feldlinsensystem umfasst, wobei der mittlere Teil der Hauptspiegellinse nicht verspiegelt ist und bei dem das Feldlinsensystem aus dem dioptrisch wirkenden Teil der Hauptspiegellinse und einem in dessen unmittelbarer Nähe objektseitig angebrachten positiven Linsenteil oder nur aus diesem Linsenteil gebildet wird, dadurch gekennzeichnet, dass zusätzlich mindestens eine zerstreuend wirkende Linse (r13, r14 ; r14, r15 ; r11, r12 ; r12, r13 ; r10, r11) in unmittelbarer Nähe der Hauptspiegellinse bildseitig angeordnet ist, und dass der Gegenspiegel (r8 ; r7) vor der Frontlinse (r1, r2) angebracht ist.

2. Objektiv nach Anspruch 1, dadurch gekennzeichnet, dass der Gegenspiegel als Spiegellinse ausgebildet ist.

3. Objektiv nach Anspruch 2, dadurch gekennzeichnet, dass die Gegenspiegellinse auf dem mittleren Teil der Frontlinse befestigt ist.

4. Objektiv nach Anspruch 1, dadurch gekennzeichnet, dass der mittlere Teil der Frontlinse ausgebohrt ist.

5. Objektiv nach Anspruch 1, dadurch gekennzeichnet, dass der mittlere Teil der Hauptspiegellinse ausgebohrt ist.

6. Objektiv nach Anspruch 1, dadurch gekennzeichnet, dass die Lage des Gegenspiegels im Objektiv veränderbar ist.

7. Objektiv nach Anspruch 1 oder 5, dadurch gekennzeichnet, dass die Lage des Feldlinsensystems im Objektiv veränderbar ist.

8. Objektiv nach Anspruch 1, dadurch gekennzeichnet, dass die optischen Elemente aus Materialien bestehen, welche ausserhalb des visuellen Spektrums lichtdurchlässig sind.

9. Objektiv nach einem der Ansprüche 1 bis 8, gekennzeichnet durch folgende Daten :

| Fläche Nr. | Radius r | Abstand d | Glasart | |
|---|---|---|---|---|
| 1 | 340.785 | 6.5 | BK 7 | |
| 2 | − 375.235 | 36 | | |
| 3 | − 120.616 | 8 | BK 7 | |
| 4 | − 215.820 | − 8 | BK 7 | Spiegel |
| 5 | − 120.616 | − 36 | | |
| 6 | − 375.235 | − 6.5 | BK 7 | |
| 7 | 340.785 | − 4 | BK 7 | |
| 8 | − 1 316.482 | 4 | BK 7 | Spiegel |
| 9 | 340.785 | 6.5 | BK 7 | |
| 10 | − 375.235 | 33 | | |
| 11 | 41.443 | 3 | BK 7 | |
| 12 | − 120.616 | 8 | BK 7 | |
| 13 | − 215.820 | 2 | SF 10 | |
| 14 | 379.752 | | | |

Brennweite f = 99.861
Schnittweite s′ = 6.785
Öffnungsverhältnis 1 : 1.2

10. Objektiv nach einem der Ansprüche 1 bis 8, gekennzeichnet durch folgende Daten :

| Fläche Nr. | Radius r | Abstand d | Glasart | |
|---|---|---|---|---|
| 1 | 325.330 | 7 | BK 7 | |
| 2 | − 341.869 | 36 | | |
| 3 | − 118.844 | 8 | BK 7 | |
| 4 | − 220.975 | − 8 | BK 7 | Spiegel |
| 5 | − 118.844 | − 36 | | |
| 6 | − 341.869 | − 7 | BK 7 | |
| 7 | 325.330 | − 4 | BK 7 | |
| 8 | − 1 252.819 | 4 | BK 7 | Spiegel |
| 9 | 325.330 | 7 | BK 7 | |
| 10 | − 341.869 | 30 | | |
| 11 | 41.468 | 2 | SF 10 | |
| 12 | 30.859 | 4 | BK 7 | |
| 13 | − 118.844 | 8 | BK 7 | |
| 14 | − 220.975 | 2 | SF 10 | |
| 15 | 512.978 | | | |

Brennweite f = 100.222
Schnittweite s′ = 7.782
Öffnungsverhältnis 1 : 1.2

11. Objektiv nach einem der Ansprüche 1 bis 8, gekennzeichnet durch folgende Daten :

| Fläche Nr. | Radius r | Abstand d | Glasart | |
|---|---|---|---|---|
| 1 | 340.832 | 7.5 | BK 7 | |
| 2 | − 389.864 | 35 | | |
| 3 | − 120.613 | 8 | BK 7 | |
| 4 | − 215.796 | − 8 | BK 7 | Spiegel |
| 5 | − 120.613 | − 38 | | |

**0 050 584**

(Fortsetzung)

| Fläche Nr. | Radius r | Abstand d | Glasart | |
|---|---|---|---|---|
| 6 | − 375.235 | − 8.5 | BK 7 | |
| 7 | − 1 315.789 | 8.5 | BK 7 | Spiegel |
| 8 | − 375.235 | 35 | | |
| 9 | 44.617 | 3 | BK 7 | |
| 10 | − 120.613 | 8 | BK 7 | |
| 11 | − 215.796 | 2 | SF 10 | |
| 12 | 379.795 | | | |

Brennweite f = 100.584
Schnittweite s′ = 6.480
Öffnungsverhältnis 1 : 1.2
12. Objektiv nach einem der Ansprüche 1 bis 8, gekennzeichnet durch folgende Daten :

| Fläche Nr. | Radius r | Abstand d | Glasart | |
|---|---|---|---|---|
| 1 | 334.001 | 6.5 | BK 7 | |
| 2 | − 373.972 | 35.9 | | |
| 3 | − 120.207 | 8 | BK 7 | |
| 4 | − 214.869 | − 8 | BK 7 | Spiegel |
| 5 | − 120.207 | − 35.9 | | |
| 6 | − 373.972 | − 6.5 | BK 7 | |
| 7 | − 1 334.001 | − 4 | BK 7 | |
| 8 | − 1 310.616 | 4 | BK 7 | Spiegel |
| 9 | 334.001 | 6.5 | BK 7 | |
| 10 | − 373.972 | 32.8 | | |
| 11 | 41.130 | 7.7 | BK 7 | |
| 12 | − 150.218 | 4 | SF 10 | |
| 13 | 625.000 | | | |

Brennweite f = 99.799
Schnittweite s′ = 7.427
Öffnungsverhältnis 1 : 1.2
13. Objektiv nach einem der Ansprüche 1 bis 8, gekennzeichnet durch folgende Daten :

| Fläche Nr. | Radius r | Abstand d | Glasart | |
|---|---|---|---|---|
| 1 | 335.570 | 7.4 | BK 7 | |
| 2 | − 383.730 | 34.4 | | |
| 3 | − 118.737 | 7.9 | BK 7 | |
| 4 | − 212.450 | − 7.9 | BK 7 | Spiegel |
| 5 | − 118.737 | − 37.4 | | |
| 6 | − 369.413 | − 8.4 | BK 7 | |
| 7 | − 1 295.337 | 8.4 | BK 7 | Spiegel |
| 8 | − 369.413 | 35.3 | | |
| 9 | 39.807 | 6.9 | BK 7 | |
| 10 | − 148.390 | 3.9 | SF 10 | |
| 11 | 461.467 | | | |

Brennweite f = 99.997
Schnittweite s′ = 7.263
Öffnungsverhältnis 1 : 1.2

**Claims**

1. Catadioptric objective of high aperture ratio, which has in the front part only a single lens, the focal length f(1, 2) of which satisfies the relationship f(1, 2) $\geqslant$ 1.8 f (f = objective focal length), and comprises a

6

main reflecting lens, a counter-mirror, and a focussing field lens system, the central zone of the main reflecting lens not being reflectively coated and wherein the field lens system is composed of the dioptrically acting part of the main reflecting lens and a positive lens part mounted in the immediate vicinity thereof on the object side or only of this lens part, characterized in that, additionally, at least one diverging lens (r13, r14 ; r14, r15 ; r11, r12 ; r12, r13 ; r10, r11) is disposed in the immediate vicinity of the main reflecting lens on the image side, and that the counter-mirror (r8 ; r7) is mounted in front of the front lens (r1, r2).

2. Objective according to claim 1, characterized in that the counter-mirror is constructed as a reflecting lens.

3. Objective according to claim 2, characterized in that the counter-reflecting lens is fixed on the central part of the front lens.

4. Objective according to claim 1, characterized in that the central part of the front lens is drilled out.

5. Objective according to claim 1, characterized in that the central part of the main reflecting lens is drilled out.

6. Objective according to claim 1, characterized in that the position of the counter-mirror in the objective is variable.

7. Objective according to claim 1 or 5, characterized in that the position of the field lens system in the objective is variable.

8. Objective according to claim 1, characterized in that the optical elements are of materials which are transparent to light outside the visual spectrum.

9. Objective according to one of claims 1 to 8, characterized by the following data :

| Surface No. | Radius r | Distance d | Type of glass | |
|---|---|---|---|---|
| 1 | 340.785 | 6.5 | BK 7 | |
| 2 | − 375.235 | 36 | | |
| 3 | − 120.616 | 8 | BK 7 | |
| 4 | − 215.820 | − 8 | BK 7 | Mirror |
| 5 | − 120.616 | − 36 | | |
| 6 | − 375.235 | − 6.5 | BK 7 | |
| 7 | 340.785 | − 4 | BK 7 | |
| 8 | − 1 316.482 | 4 | BK 7 | Mirror |
| 9 | 340.785 | 6.5 | BK 7 | |
| 10 | − 375.235 | 33 | | |
| 11 | 41.443 | 3 | BK 7 | |
| 12 | − 120.616 | 8 | BK 7 | |
| 13 | − 215.820 | 2 | SF 10 | |
| 14 | 379.752 | | | |

Focal length f = 99.861
Intercept length s′ = 6.785
Aperture ratio 1 : 1.2

10. Objective according to one of claims 1 to 8, characterized by the following data :

(See Table page 8)

| Surface No. | Radius r | Distance d | Type of glass | |
|---|---|---|---|---|
| 1 | 325.330 | 7 | BK 7 | |
| 2 | − 341.869 | 36 | | |
| 3 | − 118.844 | 8 | BK 7 | |
| 4 | − 220.975 | − 8 | BK 7 | Mirror |
| 5 | − 118.844 | − 36 | | |
| 6 | − 341.869 | − 7 | BK 7 | |
| 7 | 325.330 | − 4 | BK 7 | |
| 8 | − 1 252.819 | 4 | BK 7 | Mirror |
| 9 | 325.330 | 7 | BK 7 | |
| 10 | − 341.869 | 30 | | |
| 11 | 41.468 | 2 | SF 10 | |
| 12 | 30.859 | 4 | BK 7 | |
| 13 | − 118.844 | 8 | BK 7 | |
| 14 | − 220.975 | 2 | SF 10 | |
| 15 | 512.978 | | | |

Focal length f = 100.222
Intercept length s′ = 7.782
Aperture ratio 1 : 1.2
11. Objective according to one of claims 1 to 8, characterized by the following data :

| Surface No. | Radius r | Distance d | Type of glass | |
|---|---|---|---|---|
| 1 | 340.832 | 7.5 | BK 7 | |
| 2 | − 389.864 | 35 | | |
| 3 | − 120.613 | 8 | BK 7 | |
| 4 | − 215.796 | − 8 | BK 7 | Mirror |
| 5 | − 120.613 | − 38 | | |
| 6 | − 375.235 | − 8.5 | BK 7 | |
| 7 | − 1 315.789 | 8.5 | BK 7 | Mirror |
| 8 | − 375.235 | 35 | | |
| 9 | 44.617 | 3 | BK 7 | |
| 10 | − 120.613 | 8 | BK 7 | |
| 11 | − 215.796 | 2 | SF 10 | |
| 12 | 379.795 | | | |

Focal length f = 100.584
Intercept length s′ = 6.480
Aperture ratio 1 : 1.2
12. Objective according to one of claims 1 to 8, characterized by the following data :

| Surface No. | Radius r | Distance d | Type of glass | |
|---|---|---|---|---|
| 1 | 334.001 | 6.5 | BK 7 | |
| 2 | − 373.972 | 35.9 | | |
| 3 | − 120.207 | 8 | BK 7 | |
| 4 | − 214.869 | − 8 | BK 7 | Mirror |
| 5 | − 120.207 | − 35.9 | | |
| 6 | − 373.972 | − 6.5 | BK 7 | |
| 7 | 334.001 | − 4 | BK 7 | |
| 8 | − 1 310.616 | 4 | BK 7 | Mirror |
| 9 | 334.001 | 6.5 | BK 7 | |
| 10 | − 373.972 | 32.8 | | |
| 11 | 41.130 | 7.7 | BK 7 | |
| 12 | − 150.218 | 4 | SF 10 | |
| 13 | 625.000 | | | |

Focal length f = 99.799
Intercept length s′ = 7.427
Aperture ratio 1 : 1.2
13. Objective according to one of claims 1 to 8, characterized by the following data :

| Surface No. | Radius r | Distance d | Type of glass | |
|---|---|---|---|---|
| 1 | 335.570 | 7.4 | BK 7 | |
| 2 | − 383.730 | 34.4 | | |
| 3 | − 118.737 | 7.9 | BK 7 | |
| 4 | − 212.450 | − 7.9 | BK 7 | Mirror |
| 5 | − 118.737 | − 37.4 | | |
| 6 | − 369.413 | − 8.4 | BK 7 | |
| 7 | − 1 295.337 | 8.4 | BK 7 | Mirror |
| 8 | − 369.413 | 35.3 | | |
| 9 | 39.807 | 6.9 | BK 7 | |
| 10 | − 148.390 | 3.9 | SF 10 | |
| 11 | 461.467 | | | |

Focal length f = 99.997
Intercept length s′ = 7.263
Aperture ratio 1 : 1.2

**Revendications**

1. Objectif catadioptrique à grande ouverture, qui ne comporte dans sa partie frontale qu'une lentille unique, dont la distance focale f(1, 2) satisfait à la relation f(1, 2) ≥ 1,8 f (f = distance focale de l'objectif) et contient une lentille réflectrice principale, un contre-miroir ainsi qu'un système collecteur de lentilles de champ, dans lequel la partie centrale de la lentille réflectrice principale n'est pas réflectrice, et le système de lentilles de champ est constitué de la partie dioptriquement active de la lentille réflectrice principale ainsi que d'une portion positive de lentille placée dans son voisinage immédiat du côté de l'objet, ou seulement de cette portion de lentille, caractérisé en ce qu'en outre au moins une lentille à effet divergent (r13, r14 ; r14, r15 ; r11, r12 ; r12, r13 ; r10, r11) est disposée au voisinage immédiat de la lentille réflectrice principale du côté de l'image, et en ce que le contre-miroir (r8, r7) est placé devant la lentille frontale (r1, r2).

2. Objectif selon la revendication 1, caractérisé en ce que le contre-miroir est formé d'une lentille réflectrice.

3. Objectif selon la revendication 2, caractérisé en ce que la lentille contre-miroir est fixée sur la partie centrale de la lentille frontale.

4. Objectif selon la revendication 1, caractérisé en ce que la partie centrale de la lentille frontale est alésée.

5. Objectif selon la revendication 1, caractérisé en ce que la partie centrale de la lentille réflectrice principale est alésée.

6. Objectif selon la revendication 1, caractérisé en ce que la position du contre-miroir peut être modifiée dans l'objectif.

7. Objectif selon la revendication 1 ou 5, caractérisé en ce que la position du système de lentilles de champ peut être modifiée dans l'objectif.

8. Objectif selon la revendication 1, caractérisé en ce que les éléments optiques sont constitués de matériaux dont la transparence s'étend au-delà du spectre visuel.

9. Objectif selon une des revendications 1 à 8, caractérisées par les données suivantes :

| Surface No. | Rayon r | Distance d | Verre | |
|---|---|---|---|---|
| 1 | 340.785 | 6.5 | BK 7 | |
| 2 | − 375.235 | 36 | | |
| 3 | − 120.616 | 8 | BK 7 | |
| 4 | − 215.820 | − 8 | BK 7 | miroir |
| 5 | − 120.616 | − 36 | | |
| 6 | − 375.235 | − 6.5 | BK 7 | |
| 7 | 340.785 | − 4 | BK 7 | |
| 8 | − 1 316.482 | 4 | BK 7 | miroir |
| 9 | 340.785 | 6.5 | BK 7 | |
| 10 | − 375.235 | 33 | | |
| 11 | 41.443 | 3 | BK 7 | |
| 12 | − 120.616 | 8 | BK 7 | |
| 13 | − 215.820 | 2 | SF 10 | |
| 14 | 379.752 | | | |

Distance focale f = 99.861
Distance frontale s' = 6.785
Ouverture relative 1 : 1.2

10. Objectif selon une des revendications 1 à 8, caractérisées par les données suivantes :

| Surface No. | Rayon r | Distance d | Verre | |
|---|---|---|---|---|
| 1 | 325.330 | 7 | BK 7 | |
| 2 | − 341.869 | 36 | | |
| 3 | − 118.844 | 8 | BK 7 | |
| 4 | − 220.975 | − 8 | BK 7 | miroir |
| 5 | − 118.844 | − 36 | | |
| 6 | − 341.869 | − 7 | BK 7 | |
| 7 | 325.330 | − 4 | BK 7 | |
| 8 | − 1 252.819 | 4 | BK 7 | miroir |
| 9 | 325.330 | 7 | BK 7 | |
| 10 | − 341.869 | 30 | | |
| 11 | 41.468 | 2 | SF 10 | |
| 12 | 30.859 | 4 | BK 7 | |
| 13 | − 118.844 | 8 | BK 7 | |
| 14 | − 220.975 | 2 | SF 10 | |
| 15 | 512.978 | | | |

Distance focale f = 100.222
Distance frontale s' = 7.782
Ouverture relative 1 : 1.2

11. Objectif selon une des revendications 1 à 8, caractérisées par les données suivantes :

| Surface No. | Rayon r | Distance d | Verre | |
|---|---|---|---|---|
| 1 | 340.832 | 7.5 | BK 7 | |
| 2 | − 389.864 | 35 | | |
| 3 | − 120.613 | 8 | BK 7 | |
| 4 | − 215.796 | − 8 | BK 7 | miroir |

(Suite)

| Surface No. | Rayon r | Distance d | Verre | |
|---|---|---|---|---|
| 5 | − 120.613 | − 38 | | |
| 6 | − 375.235 | − 8.5 | BK 7 | |
| 7 | − 1 315.789 | 8.5 | BK 7 | miroir |
| 8 | − 375.235 | 35 | | |
| 9 | 44.617 | 3 | BK 7 | |
| 10 | − 120.613 | 8 | BK 7 | |
| 11 | − 215.796 | 2 | SF 10 | |
| 12 | 379.795 | | | |

Distance focale f = 100.584
Distance frontale s′ = 6.480
Ouverture relative 1 : 1.2
12. Objectif selon une des revendications 1 à 8, caractérisées par les données suivantes :

| Surface No. | Rayon r | Distance d | Verre | |
|---|---|---|---|---|
| 1 | 334.001 | 6.5 | BK 7 | |
| 2 | − 373.972 | 35.9 | | |
| 3 | − 120.207 | 8 | BK 7 | |
| 4 | − 214.869 | − 8 | BK 7 | miroir |
| 5 | − 120.207 | − 35.9 | | |
| 6 | − 373.972 | − 6.5 | BK 7 | |
| 7 | 334.001 | − 4 | BK 7 | |
| 8 | − 1 310.616 | 4 | BK 7 | miroir |
| 9 | 334.001 | 6.5 | BK 7 | |
| 10 | − 373.972 | 32.8 | | |
| 11 | 41.130 | 7.7 | BK 7 | |
| 12 | − 150.218 | 4 | SF 10 | |
| 13 | 625.000 | | | |

Distance focale f = 99.799
Distance frontale s′ = 7.427
Ouverture relative 1 : 1.2
13. Objectif selon une des revendications 1 à 8, caractérisées par les données suivantes :

| Surface No. | Rayon r | Distance d | Verre | |
|---|---|---|---|---|
| 1 | 335.570 | 7.4 | BK 7 | |
| 2 | − 383.730 | 34.4 | | |
| 3 | − 118.737 | 7.9 | BK 7 | |
| 4 | − 212.450 | − 7.9 | BK 7 | miroir |
| 5 | − 118.737 | − 37.4 | | |
| 6 | − 369.413 | − 8.4 | BK 7 | |
| 7 | − 1 295.337 | 8.4 | BK 7 | miroir |
| 8 | − 369.413 | 35.3 | | |
| 9 | 39.807 | 6.9 | BK 7 | |
| 10 | − 148.390 | 3.9 | SF 10 | |
| 11 | 461.467 | | | |

Distance focale f = 99.997
Distance frontale s′ = 7.263
Ouverture relative 1 : 1.2

0 050 584

Fig. 1

Fig. 2

Fig. 3

Fig. 4

1

## Fig. 5

## Fig. 6

## Fig. 7

1:1,2

$f = 100$

$\lambda_g = 436\,nm$

$\lambda_d = 588\,nm$

$\lambda_s = 852\,nm$

## Fig. 8

5,2°

$f = 100$

— — — — — mer.

———— sag.